# EUROPÄISCHE PATENTSCHRIFT

(11) **EP 4 022 403 B1**
(45) Veröffentlichungstag und Bekanntmachung des Hinweises auf die Patenterteilung: **12.07.2023**
(21) Anmeldenummer: 20764365.1
(22) Anmeldetag: 28.08.2020
(51) Int. Cl.: G05B 19/042, G05B 19/05

(54) **VEFAHREN UND INDUSTRIELLE STEUERUNG ZUM AUFRUFEN EINES FUNKTIONSBAUSTEINS IN EINEM STEUERUNGSPROGRAMM MIT OPC UA**
METHOD AND INDUSTRIAL CONTROLLER FOR THE SYNCHRONIZED CALLING OF A FUNCTION BLOCK IN A CONTROL PROGRAM HAVING OPC UA
PROCÉDÉ ET DISPOSITIF DE COMMANDE INDUSTRIEL POUR L'APPEL SYNCHRONISÉ D'UN BLOC FONCTIONNEL DANS UN PROGRAMME DE COMMANDE AYANT OPC UA

(30) Priorität: 30.08.2019 DE 102019123271
(43) Veröffentlichungstag der Anmeldung: 06.07.2022
(73) Patentinhaber: PHOENIX CONTACT GMBH & CO. KG, 32825 Blomberg (DE)
(72) Erfinder: THOMAS, Uwe, 33813 Oerlinghausen (DE); WEICHELT, Andreas, 32278 Kirchlengern (DE)
(74) Vertreter: Blumbach · Zinngrebe Patentanwälte PartG mbB
(86) Internationale Anmeldenummer: PCT/EP2020/074059
(87) Internationale Veröffentlichungsnummer: WO 2021/038028

(56) Entgegenhaltungen:
- EP-B1- 3 182 235
- WO-A1-2015/188852
- DE-A1-102007 062 985

## Beschreibung

Die Erfindung betrifft ein Verfahren zum Aufrufen eines Funktionsbausteins eines Steuerungsprogramms einer industriellen Steuerung, wobei die industrielle Steuerung einen OPC-UA-Server aufweist und mittels des OPC-UA-Kommunikationsprotokolls mit einem OPC-UA-Client kommuniziert, und wobei der Funktionsbaustein des Steuerungsprogramms von dem OPC-UA-Client durch Aufruf einer Methode des OPC-UA-Servers angefordert wird. Ferner betrifft die Erfindung eine entsprechend angepasste industrielle Steuerung zur Durchführung des Verfahrens.

Herkömmlicherweise arbeiten programmierte Steuerungen einen, in einem Steuerungsprogramm enthaltenen Steuerungscode, d.h. ein ausführbares Programmstück, in Tasks, d. h. in anwendungsbezogenen, zusammenhängenden Aufgaben, ab, die zyklisch von einem "Thread", d. h. von einem Ausführungsstrang oder einer Ausführungsreihenfolge, der Steuerung aufgerufen werden.

Ferner können in einem SPS-Programm ("SPS"= speicherprogrammierbare Steuerung) bekanntermaßen Methoden, Funktionen und Funktionsbausteine verwendet werden. Methoden, wie auch Funktionen, sind in der Regel zustandsunabhängig, bzw. haben keine interne Statusinformation, d.h. es werden alle Parameter zum Zeitpunkt eines jeweiligen Aufrufs übergeben und nicht gespeichert. Funktionsbausteine hingegen sind Programm-Organisationseinheiten, die in der Regel zustandsbehaftet sind und halten folglich die Parameter als Teil ihres Zustands. Es ist daher möglich, die Parameter eines Funktionsbausteins zu einem anderen Zeitpunkt zu lesen und/oder zu schreiben als der Aufruf des Funktionsbausteins.

OPC-UA-Server ("OPC-UA"; open platform communications unified architecture) können wiederum Methoden zur Verfügung stellen, die von OPC-UA-Clients angefordert werden. Der Aufruf der Methode geschieht dann üblicherweise im Kontext eines OPC-UA-Threads, welche die Anforderung von einem OPC-UA-Client entgegennimmt. Hierbei werden alle Inputparameter konsistent an die Methode übergeben und nach Ausführung werden alle Outputparameter konsistent retourniert.

Wenn ein OPC-UA-Server nach Aufruf der Methode dann jedoch auch den Steuerungscode des Steuerungsprogramms direkt aufrufen würde, kann es folglich passieren, dass diesbezüglich das Steuerungsprogramm parallel noch abgearbeitet wird, welches wiederum zu Inkonsistenzen der retournierten Parameter oder der im Steuerungsprogramm verarbeiteten Daten führen kann.

Die WO 2015/188852 A1 beschreibt ein Verfahren und eine Vorrichtung zur Transaktionserweiterung bei OPC UA, wobei eine OPC UA Session als eine einzige Transaktion aufgefasst wird. Jede von einem OPC UA Client bei einem OPC UA Server angeforderte Operation innerhalb einer Session wird dabei formal geprüft und danach zunächst simuliert. Das simulierte Ergebnis bzw. das Ergebnis der formalen Überprüfung wird dabei sofort an den Client geschickt. Die eigentliche Ausführung der angeforderten Operation wird jedoch auf das Beenden einer solchen Session verlagert, wobei der Client, wenn er denn die Ausführung der Operation wünscht, hierfür die Session entsprechend beenden muss, wodurch die Ausführung angestoßen wird.

Aus der DE 10 2007 062985 A1 ist ein Verfahren zum Einrichten zur Kommunikation gemäß dem Standartprotokoll OPC UA in einem Client-Server-System unter Verwendung des Standardprotokolls OPC UA bekannt, bei welchem in einem ersten Schritt eine OPC UA Session eingerichtet wird, in einem der weiteren Schritte von dem Client zusätzlich Services aufgerufen werden, in einem dritten Schritt von Server-Teil der Aufruf von zusätzlichen Services in einem weiteren Schritt behandelt wird, und vom OPC UA Client durch standardgemäßen Aufruf einer Methode alle Transaktionen geschlossen werden.

Aus dem Stand der Technik sind ferner bereits Lösungen bekannt, die einen Aufruf von OPC-UA-Methoden in einem SPS-Programm erlauben. Hier wird aber in der Regel die OPC-UA-Methode als SPS-Methode oder SPS-Funktion abgebildet, welche die Parameter im Kontext des Aufrufs benötigt. Nachteil bei diesem Verfahren ist unter anderem, dass der Aufruf somit entweder automatisch vor oder nach einem Taskcode geschehen muss, um Inkonsistenzen zu vermeiden, was dem Anwender jedoch die Kontrolle über den Zeitpunkt der Abarbeitung nimmt oder, dass zusätzliche Systemfunktionen aufgerufen werden müssen, um die Parameter zu übertragen. Letzteres ist zum Beispiel aus EP 3 182 235 B1 bekannt, welche ein diesbezügliches Verfahren und eine industrielle Steuerung zum Aufruf einer Funktion eines Steuerungsprogramms mittels eines OPC-UA-Aufrufs betrifft, Hierbei wird in einem ersten Schritt ein auf das Aufrufen der Funktion gerichteter OPC-UA-Aufruf von einem OPC-UA-Client an den OPC-UA-Server der industriellen Steuerung gesendet. In einem zweiten Schritt wird der OPC- UA-Aufruf durch ein Systemprogramm der industriellen Steuerung gespeichert und in einem dritten Schritt wird an einer definierten Stelle des industriellen Steuerprogramms eine Systemfunktion des Steuerprogramms aufgerufen, die überprüft, ob ein OPC-UA-Aufruf gespeichert ist, sodass in einem vierten Schritt bei Vorliegen eines solchen OPC-UA-Aufrufs die mit diesem Aufruf verknüpfte Funktion des Steuerprogramms aufgerufen wird und andernfalls das industrielle Steuerprogramm ohne Verzweigung zu der Funktion fortgesetzt wird.

Zwar wird folglich mittels der in der EP 3 182 235 B1 beschriebenen Weise ermöglicht, mittels des OPC UA-Aufrufs eine definierte Funktion bzw. einen definierten Funktionsbaustein an einer zuvor festgelegten Stelle des Steuerprogramms aufzurufen, jedoch ist hierzu, wie zuvor erwähnt, der Aufruf wenigstens einer zusätzlichen Systemfunktion notwendig, die zum Prüfen des Vorliegens eines OPC UA-Aufrufs folglich zunächst zusätzlich entsprechend eingerichtet werden muss.

Aufgabe der Erfindung ist es, einen Weg aufzuzeigen, um von einem OPC UA-Client ausgehend über eine Methode eines OPC UA-Servers einen Funktionsbaustein in einem Steuerprogramm zur Abarbeitung aufzurufen, ohne dass es einer solchen zusätzlichen Systemfunktion bedarf. Diese Aufgabe wird insbesondere durch ein Verfahren gemäß anhängenden Patentanspruch 1 gelöst, wobei zweckmäßige Ausführungsformen und Weiterbildungen Gegenstand der Unteransprüche sind. Die Aufgabe wird ferner durch eine industrielle Steuerung gemäß anhängenden Patentanspruch 8 gelöst.

Demgemäß sieht die Erfindung insbesondere ein Verfahren zum Aufrufen eines Funktionsbausteins eines Steuerprogramms einer industriellen Steuerung vor, bei welcher die industrielle Steuerung einen OPC-UA-Server aufweist und mittels des OPC-UA-Kommunikationsprotokolls mit einem OPC-UA-Client kommuniziert, wobei der Funktionsbaustein von einem OPC-UA-Aufruf des OPC-UA-Clients ausgehend angefordert wird, d. h. zur Abarbeitung angefordert wird, insbesondere von dem OPC-UA-Client ausgehend über eine Methode des OPC-UA-Servers aufgerufen wird. Erfindungsgemäß ist hierbei vorgesehen, dass beim Anfordern des Funktionsbausteins in einem ersten Schritt ein darauf gerichteter Aufruf, also insbesondere ein entsprechend an die Methode des OPC UA-Servers gerichteter Aufruf, von dem OPC-UA-Client an den OPC-UA-Server gesendet wird und in einem zweiten Schritt der OPC-UA-Aufruf vom OPC-UA-Server der industriellen Steuerung gespeichert wird. In einem dritten Schritt werden dann zusammen mit dem OPC-UA-Aufruf übergebene IN-Parameter, d.h. vom OPC-UA-Client an den OPC-UA-Server übergebene IN-Parameter, auf entsprechende IN-Parameter des Funktionsbausteins des Steuerprogramms kopiert und in einem vierten Schritt an einer zuvor definierten Stelle innerhalb einer Steuerungstask der industriellen Steuerung der Funktionsbaustein des Steuerprogramms aufgerufen wird und die IN-Parameter des Funktionsbausteins abgearbeitet werden.

Ein wesentlicher Vorteil ist folglich, dass der Funktionsbaustein selbst innerhalb eines Thread-Kontext des Steuerprogramms abgearbeitet wird und also Inkonsistenzen vermieden werden und vor Abarbeitung des Funktionsbausteins die mittels des vom OPC-UA-Client an den OPC-UA-Server gerichteten Aufrufs übergebenen IN-Parameter zunächst konsistent an das Steuerprogramm übergeben werden.

Die Aufgabe wird ferner gelöst durch eine industrielle Steuerung zum synchronisierten Aufrufen eines Funktionsbausteins in einem Steuerprogramm. Die Erfindung sieht hierzu insbesondere eine industrielle Steuerung mit einem OPC-UA Server vor, wobei die industrielle Steuerung zum Ablaufen eines Steuerungsprogramms eingerichtet ist sowie zur Kommunikation, insbesondere mittels des OPC-UA Kommunikationsprotokolls, mit einem OPC-UA-Client und ferner zum Aufrufen eines Funktionsbausteins des Steuerungsprogramms, welcher von einem OPC-UA-Aufruf des OPC-UA-Clients ausgehend anforderbar ist.

Erfindungsgemäß ist der OPC-UA Server darüber hinaus eingerichtet, zum Empfangen eines auf die Anforderung gerichteten OPC-UA-Aufrufs von dem OPC-UA-Client sowie zum Speichern des OPC-UA-Aufrufs. Die industrielle Steuerung ist ferner eingerichtet, zum Kopieren von zusammen mit dem OPC-UA-Aufruf übergebenen IN-Parametern auf entsprechende IN-Parameter des Funktionsbausteins des Steuerungsprogramms und zum Aufrufen des Funktionsbausteins des Steuerungsprogramms an einer zuvor definierten Stelle innerhalb einer Steuerungstask der industriellen Steuerung.

Auch durch diese industrielle Steuerung werden die bereits anhand des Verfahrens diskutierten Vorteile realisiert.

In einer zweckmäßigen Weiterbildung der Erfindung ist das Verfahren ausgebildet sowie bevorzugt auch die industrielle Steuerung eingerichtet und, dass durch Ausführung der Steuerungstask und also bei Abarbeitung des Funktionsbausteins des Steuerungsprogramms erhaltene OUT-Parameter des Funktionsbausteins nach Ausführung der Steuerungstask auf den OPC-UA-Server kopiert werden.

Folglich gewährleistet die Erfindung, dass auch mittels des vom OPC-UA-Client an den OPC-UA-Server gerichteten Aufruf angeforderte, auf den übergebenen IN-Parameter basierende OUT-Parameter konsistent vom Steuerungsprogramm an den OPC UA-Server übertragen werden.

Zweckmäßigerweise ist ferner vorgesehen, dass die OUT-Parameter des Funktionsbausteins einen Parameter umfassen, zum Signalisieren eines Abarbeitungsstandes und/oder eines Fehlers beim auf dem OPC UA-Aufruf basierten Abarbeiten des Funktionsbausteins.

Ferner ist in praktischer Ausführung bevorzugt vorgesehen, dass die auf den OPC UA-Server kopierten OUT-Parameter von dem OPC-UA-Server an den OPC-UA-Client zurückgegeben werden.

In zweckmäßiger Weiterbildung ist ferner vorgesehen, dass die IN-Parameter des Funktionsbausteins einen Parameter umfassen, zum Signalisieren des Vorliegens eines OPC-UA-Aufrufs.

Hierbei ist in weiterer ergänzender Fortbildung der Erfindung ferner zweckmäßig vorgesehen, dass z.B. am Ende der Ausführung der Steuerungstask zumindest der auf den Funktionsbaustein des Steuerungsprogramms kopierte IN-Parameter zum Signalisieren des Vorliegens eines OPC-UA-Aufrufs auf einen Defaultwert zurückgesetzt wird.

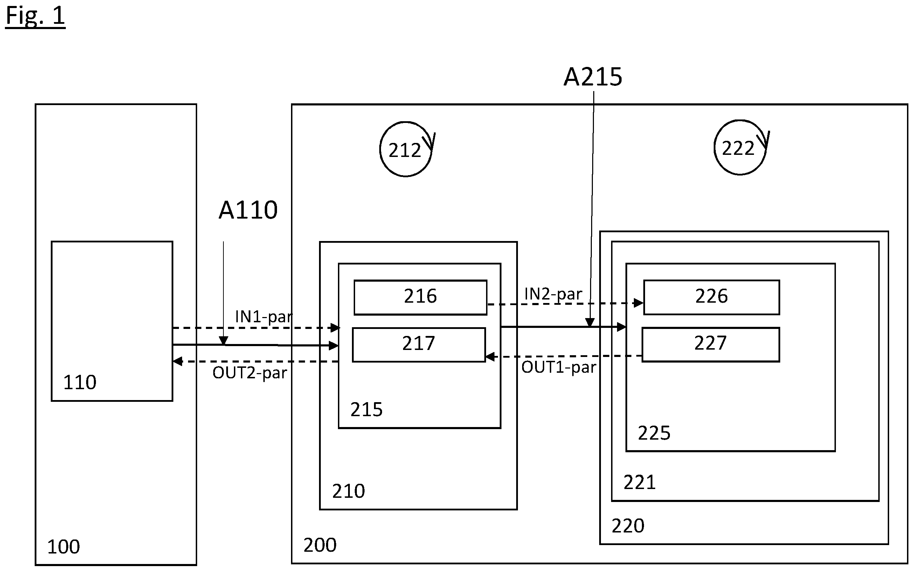

Weitere Vorteile und Merkmale der Erfindung werden aus der nachfolgenden Beschreibung in bevorzugter Ausführungsformen anhand der beigefügten Zeichnung näher beschrieben, wobei in der Zeichnung
- Fig. 1: eine Prinzipskizze wesentlicher Funktionsblöcke einer industriellen Steuerung sowie eines darauf zugreifenden Clients in stark schematisierter Darstellung zeigt.

Die Figur 1 zeigt schematisch einige zweckmäßige Softwarekomponenten einer industriellen Steuerung 200, welche bevorzugt eine speicherprogrammierbare Steuerung ist, sowie eines Clients 100.

Im Einzelnen ist dabei in zweckmäßiger Ausgestaltung in der industriellen Steuerung 200 ein während eines Steuerungs-Thread 222 abzuarbeitender Steuerung-Task 220 dargestellt, der wiederum zur Abarbeitung eines Steuerungsprogramms 221 eingerichtet ist.

Die industrielle Steuerung 200 kann darüber hinaus weitere Steuerungstasks umfassen, die innerhalb des Steuerungs-Threads 222 oder auch anderen Steuerungs-Threads, insbesondere zyklisch zur Abarbeitung weitere Steuerungsprogramme aufgerufen werden können. Wie für einen Fachmann auf dem Gebiet an und für sich bekannt, dienen Steuerungsprogramme, auch als Anwendungsprogramme bezeichnet, herkömmlicherweise zur Steuerung oder Kontrolle einer Anwendung, beispielsweise innerhalb eines industriellen Prozesses oder einer industriellen Fertigung. Im Rahmen dieser Anwendungen können dann entsprechende Funktionsbausteine, wie beispielsweise der Funktionsbausteins 225 aufgerufen werden, die anwendungsbedingt zur Abarbeitung einer speziellen Anwendung oder auch Funktion eingerichtet sind.

Das bei Fig. 1 skizzierte Steuerungsprogramm 221 umfasst hierbei einen Funktionsbaustein 225, der zur Verarbeitung von IN-Parametern 226 zu OUT-Parametern 227 entsprechend eingerichtet ist. Allgemein gesprochen umfasst ein Funktionsbaustein folglich in praktischer Ausführung eine definierte Funktion zur Abarbeitung bestimmter Eingangsparameter, wobei nach Abarbeitung des Funktionsbausteins auf den Eingangsparametern und der Funktion basierende Ausgangsparameter erhalten werden, die als Ausgangsparameter des Funktionsbausteins zur weiteren Verarbeitung übergeben und/oder in einen hierfür auf der industriellen Steuerung vorgesehenen, jedoch nicht näher dargestellten Speicherbereich geschrieben werden können.

Insbesondere um Inkonsistenzen zwischen den IN-Parametern 226 und den OUT-Parametern 227 zu vermeiden ist die industriellen Steuerung 200 ferner zweckmäßig eingerichtet, dass die Abarbeitung des Funktionsbausteins 225 stets an einer zuvor definierten Stelle innerhalb der Steuerungstask 220 während des Steuerungs-Threads 222 erfolgt, insbesondere zyklisch erfolgt.

Ferner umfasst die industrielle Steuerung 200, insbesondere als Teil oder Erweiterung eines nicht näher dargestellten Betriebssystems, auch einen OPC-UA-Server 210 zur Kommunikation, d.h. insbesondere zum Datenaustausch, zwischen der industriellen Steuerung und einem extern der industriellen Steuerung angeordneten Client 100, wobei auf dem Client 100 zur diesbezüglichen Kommunikation ein OPC-UA-Client 110 eingerichtet ist. Die Kommunikation bzw. der Datenaustausch zwischen der industriellen Steuerung 200 und dem Client 100 erfolgt somit über den OPC-UA-Server 210 und dem OPC-UA-Client 110, zweckmäßig mittels eines für den Fachmann an und für sich bekannten OPC-UA Kommunikationsprotokolls.

Auf dem OPC UA-Server 210 ist ferner eine Methode 215 definiert, die bevorzugt auf die Anforderung A215 der Funktion entsprechend dem Funktionsbaustein 225 des Steuerungsprogramms gerichtet ist, und über einen Aufruf A110 des OPC-UA-Clients 110 aufgerufen werden kann.

Insbesondere ist im Rahmen eines solchen Aufrufs A110 vorgesehen, zusammen mit dem Aufruf A110 bestimmte IN-Parameter 216 zunächst vom OPC-UA-Client 110 an den OPC UA-Server 210 zu übergeben, bei Fig. 1 mit dem zwischen dem OPC-UA-Client 110 und dem OPC UA-Server 210 gestrichelt dargestellten und mit "IN1-par" gekennzeichneten Pfeil angezeigt, sodass diese IN-Parameter 216 gemäß einer bestimmten Vorschrift, d.h. insbesondere gemäß der Funktion entsprechend dem Funktionsbaustein 225 verarbeitet werden und anschließend hieraus erhaltene OUT-Parameter 217 zweckmäßig vom OPC UA-Server 210 an den OPC-UA-Client 110 zurückzugeben werden, bei Fig. 1 mit dem zwischen dem OPC-UA-Client 110 und dem OPC UA-Server 210 gestrichelt dargestellten und mit "OUT2-par" gekennzeichneten Pfeil angezeigt,. Die spezielle Verarbeitungsvorschrift ist im Funktionsbaustein 225 des Steuerungsprogramms 221 hinterlegt, sodass mit anderen Worten die Methode 215 durch den Funktionsbaustein 225 im Steuerungsprogramm 221 repräsentiert ist.

Insbesondere kann folglich aus dem industriellen Prozess oder der industriellen Fertigung herkommend und also von extern der industriellen Steuerung spontan bzw. zu einem beliebigen Zeitpunkt eine Anforderung des Funktionsbausteins 225, d.h. die Anforderung einer Abarbeitung von bestimmten IN-Parametern zu OUT-Parametern, erfolgen.

Bevorzugt ist vorgesehen, dass die durch den Aufruf A110 aufgerufene Methode 215 vom OPC UA-Server 210 innerhalb eines entsprechenden UA-Threads 212 abgearbeitet wird. Hierbei wird dann folglich ein Aufruf A110 von dem OPC UA-Client 110, sofern vorhanden, entgegengenommen, und zweckmäßig die mit dem Aufruf der Methode vom OPC UA-Client entgegengenommenen IN-Parameter 216 zum einen im OPC UA-Server 210 gespeichert und andererseits auf die IN-Parameter 226 des Funktionsbausteins 225 des Steuerungsprogramms 221 kopiert, bei Fig. 1 mit dem zwischen dem OPC-UA- Server 210 und dem Funktionsbaustein 225 gestrichelt dargestellten und mit "IN2-par" gekennzeichneten Pfeil angezeigt. Zusätzlich wird innerhalb dieses Threads 212, oder alternativ in einem nachfolgenden Thread, die vom Steuerungsprogramm 221 entsprechend nach Verarbeitung der IN-Parameter 226 erhaltenen OUT-Parameter 227 des Funktionsbausteins auf den OPC UA-Server 215 als OUT-Parameter 217 kopiert, bei Fig. 1 mit dem zwischen der OPC-UA- Server 210 und dem Funktionsbaustein 225 gestrichelt dargestellten und mit "OUT1-par" gekennzeichneten Pfeil angezeigt. Entsprechend gibt der OPC UA-Server 210 in diesem Thread oder in einem darauffolgenden Thread die OUT-Parameter 217 an den OPC UA-Client 110 zurück (vgl. "OUT2-par").

Die in der Figur 1 zwischen den Komponenten gestrichelt dargestellten Pfeile zeigen hierbei den Daten- bzw. Parameterfluss an und die in der Figur 1 zwischen den Komponenten durchgängig linierten Pfeile den Kontrollfluss an. Ein bevorzugtes Verfahren zum Anfordern des Funktionsbausteins (225) sieht dementsprechend vor, dass der OPC UA-Client 110 die Methode 215 des OPC UA-Servers 210 aufruft und hierbei entsprechend IN-Parameter an den OPC UA-Server übergibt (vgl. "IN1-par"). Dieser Aufruf, zusammen mit den IN-Parameter 216, wird vom OPC UA-Server 210 gespeichert. Anschließend werden die IN Parameter 216 der Methode 215 dann auf die IN-Parameter 226 des Funktionsbausteins 225 des Steuerungsprogramms 221 kopiert (vgl. "IN2-par"). Wenn die Steuerungstask 220 von dem Steuerungsthread 222, zweckmäßig zyklisch, dann das nächste Mal zum Auszuführen aufgerufen wird, ruft das Steuerungsprogramm 221 innerhalb der Steuerungstask 220 wiederum den Funktionsbausteine 225 auf, verarbeitet die zuletzt einkopierten IN-Parameter 226 und schreibt die hierbei aktuell erhaltenen OUT-Parameter 227 des Funktionsbausteins 225. Nach der Ausführung der Steuerungstask 220 werden für die Methode 215 die OUT-Parameter 227 an den OPC UA-Server 210 kopiert (vgl. "OUT1-par"). Daraufhin kann der OPC UA-Server diese dann in dem Thread 212 an den OPC UA-Client 110 zurückgeben (vgl. "OUT2-par").

Zweckmäßig enthalten die IN-Parameter 226 zusätzlich einen Parameter zum Signalisieren des Vorliegens eines OPC-UA-Aufrufs. Ist ein solcher IN-Parameter folglich auf einen entsprechenden Parametereingang des Funktionsbausteins 225 kopiert, signalisiert dieser dem Funktionsbaustein, dass ein Aufruf vom OPC UA-Server ansteht. Dieser, einen anstehenden Aufruf signalisierenden IN-Parameter kann bevorzugt durch das Steuerungsprogramm 221 oder aber auch durch den OPC UA-Server 210 z.B. Ende der Ausführung der Steuerungstask zurückgesetzt, d.h. insbesondere auf einen Defaultwert zurückgesetzt werden. Mittels eines solchen Defaultswerts wird also zweckmäßig signalisiert, dass kein erneuter OPC-UA-Aufruf und also keine erneute Abarbeitung des Funktionsbausteins ansteht. Das Zurücksetzen könnte alternativ auch vor Beginn der nächsten Ausführung der Steuerungstask erfolgen.

In alternativer oder ergänzender bevorzugter Ausführung erhalten die OUT-Parameter 227 des Funktionsbausteins 225 nach Verarbeitung der IN-Parameter 226 noch wenigstens einen weiteren Parameter, der oder die einen Abarbeitungsstand und/oder einen Fehler beim auf dem OPC-UA-Aufruf basierten Abarbeiten des Funktionsbausteins signalisiert bzw. signalisieren.

Insbesondere kann hierdurch folglich der Funktionsbaustein signalisieren, dass der Methodenaufruf A215 zum Aufrufen des Funktionsbausteins vollständig abgearbeitet wurde und/oder ein die Abarbeitung betreffender Fehlercode dargestellt werden, der im Fehlerfall zweckmäßig an den OPC UA-Client 110 zurückgegeben werden kann.

Wesentliche Vorteile des erfindungsgemäßen Verfahrens sind folglich darin zu sehen, dass bei einem Aufruf von einem OPC UA-Client eines Funktionsbausteins in einem Steuerprogramm über eine Methode eines OPC UA-Servers, der Funktionsbaustein im Thread-Kontext des Steuerprogramms abgearbeitet werden kann, die In-Parameter der Methode konsistent an das Steuerungsprogramm übergeben werden, wobei aufgrund der Abarbeitung des Funktionsbausteins 225 an einer zuvor definierten Stelle innerhalb einer Steuerungstask 220 ein Anwender des Steuerungsprogramms stets die vollständige Kontrolle über den Zeitpunkt der Abarbeitung des Funktionsbausteins behält, und die Out-Parameter der Methode in zweckmäßiger Weise konsistent vom Steuerungsprogramm an den OPC UA-Server übertragen werden können. Einer zusätzlichen Systemfunktion, insbesondere ähnlich zu der in EP 3 182 235 B1 beschriebenen Weise, zum Überprüfen, ob ein OPC-UA-Aufruf gespeichert ist, bedarf es folglich nicht, welches insgesamt die Abarbeitung nochmals beschleunigt.

In praktischer Ausführung ist eine wie bei Fig. 1 skizzierte industrielle Steuerung 200 mit dem OPC-UA Server 210 folglich zum Ablaufen des Steuerungsprogramms 221 eingerichtet, sowie zur Kommunikation, insbesondere mittels des OPC-UA Kommunikationsprotokolls, mit einem OPC-UA-Client 110 sowie ferner zum Aufrufen des Funktionsbausteins 225 des Steuerungsprogramms 221, welcher von einem OPC-UA-Aufruf des OPC-UA-Clients 110 ausgehend anforderbar ist, wobei der OPC-UA Server 210 zum Empfangen eines auf die Anforderung gerichteten OPC-UA-Aufrufs von dem OPC-UA-Client 110 sowie zum Speichern des OPC-UA-Aufrufs eingerichtet ist. Wie zuvor in bevorzugter Ausführung beschrieben, ist die industrielle Steuerung 200 somit zweckmäßig ferner eingerichtet, zum Kopieren von zusammen mit dem OPC-UA-Aufruf übergebenen IN-Parametern 216 auf entsprechende IN-Parameter 226 des Funktionsbausteins 225 des Steuerungsprogramms 221 und zum Aufrufen des Funktionsbausteins 225 des Steuerungsprogramms 221 an einer zuvor definierten Stelle innerhalb einer Steuerungstask der industriellen Steuerung 200 zum Abarbeiten der IN-Parameter des Funktionsbausteins 225.

### Bezugszeichenliste

- 100: Client.
- 110: OPC UA-Client
- A110: Aufruf des OPC-UA-Clients
- 200: industrielle Steuerung
- 210: OPC-UA Server
- 212: UA-Thread
- 215: Methode
- A215: Methodenaufruf
- 216: Eingangs- oder IN-Parameter
- 217: Ausgangs- oder OUT-Parameter
- 220: Steuerung-Task
- 221: Steuerungsprogramm
- 222: Steuerungs-Thread
- 225: Funktionsbaustein
- 226: Eingangs- oder IN-Parameter des Funktionsbausteins
- 227: Ausgangs- oder OUT-Parameter des Funktionsbausteins
- In1-par: Übergabe von IN-Parameter vom OPC UA-Client an den OPC-UA-Server
- IN2-par: Kopieren der übergebenen IN-Parameter auf IN-Parameter des Funktionsbausteins
- OUT1-par: Kopieren der OUT-Parameter des Funktionsbausteins an den OPC UA-Server
- OUT2-par: Übergabe der kopierten OUT-Parameter an den OPC-UA- Client

## Patentansprüche

1. Verfahren zum Aufruf eines Funktionsbausteins (225) eines Steuerungsprogramms (221) einer industriellen Steuerung (200), wobei
- die industrielle Steuerung (200) einen OPC-UA Server (210) aufweist,
- die industrielle Steuerung (200) mit einem OPC-UA-Client (110) kommuniziert, und
- der Funktionsbaustein (225) von einem OPC-UA-Aufruf des OPC-UA-Clients (110) ausgehend angefordert wird,
wobei beim Anfordern des Funktionsbausteins (225)
- in einem ersten Schritt
ein darauf gerichteter OPC-UA-Aufruf (A110) von dem OPC-UA-Client (110) an den OPC-UA-Server (210) der industriellen Steuerung (200) gesendet wird,
**dadurch gekennzeichnet, dass**
- in einem zweiten Schritt
der OPC-UA-Aufruf (A110) vom OPC-UA-Server der industriellen Steuerung (200) gespeichert wird,
- in einem dritten Schritt
zusammen mit dem OPC-UA-Aufruf übergebene (IN1-par) IN-Parameter (216) auf entsprechende IN-Parameter (226) des Funktionsbausteins (225) des Steuerungsprogramms (221) kopiert (IN2-par) werden, und
- in einem vierten Schritt
an einer zuvor definierten Stelle innerhalb einer Steuerungstask (220) der industriellen Steuerung (200) der Funktionsbaustein (225) des Steuerungsprogramms (221) aufgerufen wird und die IN-Parameter des Funktionsbausteins (225) abgearbeitet werden.

2. Verfahren nach Anspruch 1, wobei durch Ausführung der Steuerungstask (220) bei Abarbeitung der IN-Parameter (226) des Funktionsbausteins (225) des Steuerungsprogramms (221) erhaltene OUT-Parameter (227) des Funktionsbausteins (225) nach Ausführung der Steuerungstask (220) auf den OPC UA Server kopiert (OUT1-par) werden.

3. Verfahren nach Anspruch 2, wobei die OUT-Parameter (227) zusätzlich wenigstens einen Parameter umfassen, zum Signalisieren eines Abarbeitungsstandes und/oder eines Fehlers beim auf dem OPC-UA-Aufruf basierten Abarbeiten des Funktionsbausteins.

4. Verfahren nach Anspruch 2 oder 3, wobei die auf den OPC UA Server kopierten OUT-Parameter (217) von dem OPC-UA Server an den OPC UA Client zurückgegebenen (OUT2-par) werden.

5. Verfahren nach einem der Anspruch 1 bis 4, wobei die IN-Parameter (226) einen Parameter umfassen, zum Signalisieren des Vorliegens des OPC-UA-Aufrufs.

6. Verfahren nach Anspruch 5, wobei am Ende der Ausführung oder vor Beginn der nächsten Ausführung der Steuerungstask zumindest der auf den Funktionsbaustein des Steuerungsprogramms (221) kopierte IN-Parameter zum Signalisieren des Vorliegens eines OPC UA Aufrufs auf einen Defaultwert zurückgesetzt wird.

7. Verfahren nach einem der Ansprüche 1 bis 6, wobei die industrielle Steuerung (200), mittels des OPC-UA Kommunikationsprotokolls mit dem OPC-UA-Client (110) kommuniziert.

8. Industrielle Steuerung (200) mit einem OPC-UA Server (210), wobei die industrielle Steuerung zum Ablaufen eines Steuerungsprogramms (221) eingerichtet ist, wobei die industrielle Steuerung (200) eingerichtet ist, zur Kommunikation mit einem OPC-UA-Client (110) sowie ferner zum Aufrufen eines Funktionsbausteins (225) des Steuerungsprogramms (221), welcher von einem OPC-UA-Aufruf des OPC-UA-Clients (110) ausgehend anforderbar ist,
wobei der OPC-UA Server (210) eingerichtet ist, zum Empfangen eines auf die Anforderung gerichteten OPC-UA-Aufrufs von dem OPC-UA-Client (110),
**dadurch gekennzeichnet, dass** der OPC-UA Server (210) ferner zum Speichern des OPC-UA-Aufrufs eingerichtet ist,
und die industrielle Steuerung (200) ferner eingerichtet ist, zum Kopieren von zusammen mit dem OPC-UA-Aufruf übergebenen IN-Parametern (216) auf entsprechende IN-Parameter (226) des Funktionsbausteins (225) des Steuerungsprogramms (221) und zum Aufrufen des Funktionsbausteins (225) des Steuerungsprogramms (221) an einer zuvor definierten Stelle innerhalb einer Steuerungstask der industriellen Steuerung (200) zum Abarbeiten der IN-Parameter des Funktionsbausteins (225).

9. Industrielle Steuerung (200) nach Anspruch 8, wobei die industrielle Steuerung (200) zur Kommunikation mittels des OPC-UA Kommunikationsprotokolls mit dem OPC-UA-Client (110) eingerichtet ist.

## Claims

1. Method for calling a function block (225) of a control program (221) of an industrial controller (200), wherein
- the industrial controller (200) comprises an OPC UA server (210),
- the industrial controller (200) communicates with an OPC UA client (110),
- and the function block (225) is requested starting from an OPC UA call of the OPC UA client (110),
wherein when the function block (225) is requested
- in a first step,
an OPC UA call (A110) directed thereto is sent from the OPC UA client (110) to the OPC UA server (210) of the industrial control (200),
**characterized in that**, that
- in a second step,
the OPC UA call (A110) is stored by the OPC UA server of the industrial controller (200),
- in a third step,
(IN1-par) IN parameters (216) transferred together with the OPC UA call are copied (IN2-par) to corresponding IN parameters (226) of the function block (225) of the control program (221), and
- in a fourth step,
at a previously defined point within a control task (220) of the industrial controller (200), the function block (225) of the control program (221) is called and the IN parameters of the function block (225) are processed.

2. Method according to claim 1, wherein OUT parameters (227) of the function block (225) obtained by execution of the control task (220) during processing of the IN parameters (226) of the function module (225) of the control program (221) are copied (OUT1- par) to the OPC UA server after execution of the control task (220).

3. Method according to claim 2, wherein the OUT parameters (227) additionally comprise at least one parameter for signaling a processing status and/or an error during the OPC UA call-based processing of the function block.

4. Method according to claim 1, 2 or 3, wherein the OUT- parameters (217) copied to the OPC UA server are returned (OUT2-par) from the OPC UA server to the OPC UA client.

5. Method according to any one of claims 1 to 4, wherein the IN parameters (226) comprise a parameter for signaling the presence of the OPC UA call.

6. Method according to claim 5, wherein at the end of the execution, or prior to the start of the next execution of the control task, at least the IN parameter copied to the function block of the control program (221) is reset to a default value to signal the presence of an OPC UA call.

7. Method according to any one of claims 1 to 6, wherein the industrial controller (200) communicates with the OPC UA client (110) by means of the OPC UA communication protocol.

8. industrial controller (200) having an OPC UA server (210), wherein the industrial controller is designed to run a control program (221), wherein the industrial controller (200) is designed to communicate with an OPC UA client (110), as well as furthermore to call a function block (225) of the control program (221), which function block can be requested starting from an OPC UA call of the OPC UA client (110), wherein the OPC UA server (210) is designed for receiving an OPC UA call directed to the request from the OPC UA client (110),
**characterized in that**, the OPC UA server (210) is further designed for storing the OPC UA call,
and the industrial controller (200) is further designed for copying IN parameters (216) transferred together with the OPC UA call to corresponding IN parameters (226) of the function block (225) of the control program (221) and for calling the function block (225) of the control program (221) at a previously defined point within a control task of the industrial controller (200) for processing the IN parameters of the function block (225).

9. Industrial controller (200) according to claim 8, wherein the industrial controller (200) is designed to communicate with the OPC UA client (110) by means of the OPC UA communication protocol.

## Revendications

1. Procédé pour appeler un bloc fonctionnel (225) d'un programme de commande (221) d'une commande industrielle (200), dans lequel
- la commande industrielle (200) présente un serveur OPC-UA (210),
- la commande industrielle (200) communique avec un client OPC-UA (110), et
- le bloc fonctionnel (225) est demandé à partir d'un appel OPC-UA du client OPC-UA (110),
dans lequel lors de la demande du bloc fonctionnel (225)
- dans une première étape
un appel OPC-UA (A110) dirigé vers celui-ci est envoyé à partir du client OPC-UA (110) au serveur OPC-UA (210) de la commande industrielle (200),
**caractérisé en ce que**
- dans une deuxième étape
l'appel OPC-UA (A110) à partir du serveur OPC-UA de la commande industrielle (200) est mis en mémoire,
- dans une troisième étape
les paramètres IN (216) transférés (IN1-par) conjointement avec l'appel OPC-UA sont copiés (IN2-par) sur les paramètres IN (226) correspondants du bloc fonctionnel (225) du programme de commande (221), et
- dans une quatrième étape
à un emplacement précédemment défini à l'intérieur d'une tâche de commande (220) de la commande industrielle (200) le bloc fonctionnel (225) du programme de commande (221) est appelé et les paramètres IN du bloc fonctionnel (225) sont traités.

2. Procédé selon la revendication 1, dans lequel les paramètres OUT (227) du bloc fonctionnel (225) obtenus par réalisation de la tâche de commande (220) lors du traitement des paramètres IN (226) du bloc fonctionnel (225) du programme de commande (221) sont copiés (OUT1-par) sur le serveur OPC UA après réalisation de la tâche de commande (220) .

3. Procédé selon la revendication 2, dans lequel les paramètres OUT (227) comprennent en plus au moins un paramètre, pour la signalisation d'un état de traitement et/ou d'une erreur lors du traitement du bloc fonctionnel basé sur l'appel OPC-UA.

4. Procédé selon la revendication 2 ou 3, dans lequel les paramètres OUT (217) copiés sur le serveur OPC UA sont rendus (OUT2-par) par le serveur OPC-UA au client OPC UA.

5. Procédé selon l'une quelconque des revendications 1 à 4, dans lequel les paramètres IN (226) comprennent un paramètre pour la signalisation de la présence de l'appel OPC-UA.

6. Procédé selon la revendication 5, dans lequel à la fin de la réalisation ou avant le début de la réalisation suivante de la tâche de commande au moins le paramètre IN copié sur le bloc fonctionnel du programme de commande (221) est réinitialisé à une valeur par défaut pour la signalisation de la présence d'un appel OPC UA.

7. Procédé selon l'une quelconque des revendications 1 à 6, dans lequel la commande industrielle (200) communique avec le client OPC-UA (110) au moyen du protocole de communication OPC-UA.

8. Commande industrielle (200) avec un serveur OPC-UA (210), dans laquelle la commande industrielle est conçue pour l'exécution d'un programme de commande (221), dans laquelle la commande industrielle (200) est conçue pour la communication avec un client OPC-UA (110) ainsi qu'en outre pour appeler un bloc fonctionnel (225) du programme de commande (221), lequel peut être demandé à partir d'un appel OPC-UA du client OPC-UA (110),
dans laquelle le serveur OPC-UA (210) est conçu pour recevoir un appel OPC-UA dirigé sur la demande à partir du client OPC-UA (110),
**caractérisée en ce que** le serveur OPC-UA (210) est conçu en outre pour mettre en mémoire l'appel OPC-UA,
et la commande industrielle (200) est conçue en outre pour copier les paramètres IN (216) transférés conjointement avec l'appel OPC-UA sur les paramètres IN (226) correspondants du bloc fonctionnel (225) du programme de commande (221) et pour appeler le bloc fonctionnel (225) du programme de commande (221) à un emplacement précédemment défini à l'intérieur d'une tâche de commande de la commande industrielle (200) pour traiter les paramètres IN du bloc fonctionnel (225).

9. Commande industrielle (200) selon la revendication 8, dans laquelle la commande industrielle (200) est conçue pour communiquer avec le client OPC-UA (110) au moyen du protocole de communication OPC-UA.
